# EUROPEAN PATENT APPLICATION

(11) **EP 0 887 605 A2**
(43) Date of publication of application: **30.12.1998**
(21) Application number: 98202053.9
(22) Date of filing: 18.06.1998
(51) Int. Cl.: F25D 23/06, B29C 44/18

(54) **Element of contenance of expanded materials used for wall insulation, especially of refrigerators**

(30) Priority: 24.06.1997 IT PN970037
(71) Applicant: Selan, Flavio, 33170 Pordenone -PN- (IT); Bernardi, Leone Sandro, 36061 Bassano del Grappa -VI- (IT)
(72) Inventor: Selan, Flavio, 33170 Pordenone -PN- (IT); Bernardi, Leone Sandro, 36061 Bassano del Grappa -VI- (IT)
(74) Representative: Da Riva, Ermanno

(57) **Abstract**

Element of contenance of expanded materials used for the walls insulation expecially of refrigerators; this element of contenance 1 is formed of a cover made of fabric conformed to the basin 2 of the refrigerator, anyway with bigger dimensions to the thickness of the interplace of insulation. This cover is fixed with its margin to the correspondent perimetral margin 23 of the basin 2 and it presents in correspondence with the usual introduction point point of the expanded material, the tube 12.

The assembling of the basin 2, covered by the element of contenance 1 and of the other components of the cold store takes place as usually but the expanded material is injected through the mentioned tube 12 in the space resulting between the walls of basin 2 and the cover of the element of contenance 1 to adhere the same to the opposite walls of contenance.

The application of the element of contenance 1 prevents the outcoming of the expanded material and the subsequent forming of slabbers in the critical areas.

## Description

This product presents a particular element made of fabric material that opportunely applied to interspaces , which are combineted with a suitable expanded material to form thermoisolated walls prevents the forming of slabbers due to the dispersion in localised areas of the same interspaces , of the above mentioned expanded material , apporting ulterior and remarkable executive and economics advantages ; the appliance of this element is especially indicated for the production of domestic refrigerators .

Obviously the walls of these domestic refrigerators , different in form and dimensions , are opportunely insulated and their insulation is obteined by the nowaday more applied technique , and exactly by injecting into the interspaces situated within an external and an internal covering an adeguated expanded material , normally a suitable poliurethaned resin .

As known by the realisation of the covering that forms the cold store , which normally has a parallelepiped form , and presenting an open face to which is applied the mobile wall that forms the relevant door , and especially in the perimetrical walls angles where the door get closed , due to realization reasons appear fissures from which the expanded material can go out forming undesired and unestetical slabbers that invalidate the products quality making it pratically uncommercial . The removal of these slabbers is very difficult and expensive , sometime even inpossible , therefore the product cannot be utilized and must be eliminated causing many negative economical effects .

In order to avoide this inconvenience various systems of insulation of these fissures have been developed , e.g. the application in these areas of spongy material or other materials composed of different substances , that although permitting the passage before the immission of the expanded material ,of the gas utilized for the expansion and of the air present in the interface , they obstacle or should obstacle the forming of slabbers .

Anyway these solutions result very dispendious , seein that in order to be applied they necessite of the presence of one or more persons and relevant application time , further to it they do not resolve completely the problem because the result is a discrete reduction of the straining that most of the times persist causing other slabbers that only in certain circunstances can be parcially removed with results that are anyway discutable and unsufficente , considering also the presence of operators and the subsequent costs .

The aim of this element is to avoide these inconveniences and this is obteined by utilizing the element of contenance in object that is here below described so to explane the characteristics and advantages resulting from a preferencial form :
fig. n. 1 shows throught a prospectical exploded view the element of contenance that is the object of the present element; the inner basin that with its walls defines the utilization opening of a generical refrigerator and the external covering of the same , that with its walls , adequately distanced from the basin , delimits the corrispondent perimetral interfaces , that when filled up as known , with expanded material , form the perimetral walls which are thermically insulated and the posterior insulation wall, that for practical reasons is not rapresented in this figur ;
fig. n.2 shows throught a vertically sectioned view the cold store of a refrigerator with the application on the same of the element of contenance in object and the disposition of the same before the walls insulation of the same cold store ;
fig. n.3 shows as by fig. n.2 , the same cold store and the final disposition by occurred insulation of the element of contenence ;
figs. n.4 and n.5 explane with enlarged views respectively parts A and B of the relevant figures n.2 and n.3 .

In these figures the common parts are noted with the same references .

With reference to fig. n. 1 is to notice : the element of contenance 1 that is the object of the discovery, the basin 2 which defines the internal opening of a refrigerator and the perimetral cover 3 of the same refrigerator

The element of contenance 1 is realized with an adequated material that is cutted and sewed to forming a cover with the form of a sack that results to be substantially formed to the basin 2 , to which it will be applied as below explaned , anyway with reference to the external surface of the same (2) it presents bigger dimensions with values at least equal or preferably lightly superior to the thickness of the interface of insulation required .

On the basic wall 11 of the same sack, that by the application corresponds to the posterior wall of insulation, in the position normally realized for the introduction of the expanded material of insulation , there is a hole to which is connected the tube 12 , substancially cilindric with a discreet length and an adequated diameter to allow , as below described , the connection to the nozzle of injection of the above mentioned expanded material .

As known the basin 2 has substancially a parallelepiped form , presenting in the inferior part of its basic wall 21the re-entry 22 which is of adequated dimensions that realizes the opening for the contenance of the compressor of the refrigerator circuite . Naturally also the cover forming the mentioned element of contenance 1 is conformed referring to this re-entry 22 with a correspondent re-entry 13 .

From the anterior perimetral margin of this basin 2 diparts also , orthogonally directed to the exterior , a correspondent perimetral margin 23 variously conformed with reference to all the possible realization forms of the cold stores .

Finally , the same perimetral cover 3 is made of an element of metallic plate substantially of parallelepiped form ; its two opposite faces, respectively the front and back faces of the refrigerator are open and from the correspondent margins the correspondent small margins , front 31 and back 32 depart orthogonally innerly shifted .

After having described the form of the principal elements that are parts of the form object of the present discovery we describe the practical realization referring far to the already considered fig. n. 1 also to the following figures n.2,3,4 and 5.

First of all this element of contenance 1 must be fitted to the basin 2 , and so on to adhere to the inner surface of the small margin 23 of the same basin 2, an opportune part 14 of its perimetral margin which is opportunely shifted to the extenor .

In order to facilitate the positioning of the mentioned part 14 , to the relevant inner part can be applied an adequated biadhesive tape 15 which is indicated in fig.n. 1 by sketched line .

Along the vertical and orizontal tracts of the small margin 23 of the basin 2 are applied the listels 4, normally composed by an opportune metal strap and presenting a discret thickness and a length lightly inferior to the widness of the resulting interface of insulation ; as known its function is to allow the positioning of the basin 2 into the perimetral cover 3 .

These listels 4 are therefore fixed to the perimetral margin 23 in the known way and with methods that variate with reference to the possible and different executive solutions, so that as by figures n.2 and n.3 and more clarely by figures n.4 and n.5 , the tract 14 of the perimetral margin of the element of contenance 1 is feed between these (4 ) and the opposite perimetral margin 23 of the basin 2 .

Finally the basin 2 , so covered by the element of contenance 1 is placed into the perimetral cover 3 and to the posterior part of the same is applied the conformed wall 5 that can be realized with an adequated metallic sheet or also with an adequate plastic sheet .

The conformed wall 5 is provided of an adequated hole 51 in concomitance of the tube 12 that departs from the basic wall 11 of the element of contenance 1 , from which the same tube 12 protrudes , as reported on fig. n.2 .

Initially, before the operation of injection of the expanded material , the element of contenance is made flabby around the basin 2, see fig. n.2 and n.4 .

The whole manufact is disposed , as usually , between the male and female parts of an adequated dispositive act to delimit, during the phase of injection of the expanded material , the thickness of the insulation walls, avoiding that the pressure that develops in this phase , can deform the conformation of the walls of the various elements that compose it .

It is to notice that for clarification reasons , by the fig. n.2 and n.3 , the cover 1 is indicated with marked lines .

To this point the tube 12 is connected to the nozzle of injection of the expanded material , therefore with an adequated equipment, that prepares the mixture formed by expansible resin and a lowboiling gas that provokes its expansion , this mixture is injected into the space between the external walls of the basin 2 and those defined by the element of contenance 1 that is applied to the same basin .

The progressive injection of expanded mixture and the relevant progressive expansion cause the swelling of the cover that forms the same element of contenance 1 that in this way is progressively pushed against the inner surfaces of the walls of the perimetral cover 3 , of the conformed wall 5 and the listels 4, finally realizing , when the interspace resulting from these walk and those of the basin 2 is completely fullfilled , the forming of a correspondent bed of insulation.

When the injection of the expanded material is completed, after an adequated solidification time of the same, the tube 12 , that protrudes from the conformed wall 5 , is removed by cutting it in correspondence of this wall .

Obviously the particular connection of tract 14 of the margin of the element of contenance 1 to the perimetral margin 23 of the basin 2 , prevents drawnings of expanded material into the opening 6 , (see fig. n.4 and n.5), that results from the perimetral margin 23 , the front margin 31 of the perimetral cover 3 and the listel 4 .

Subsequently the drawings from the fissures that normally are situated in the angles of the same front margin 31 are eliminated and therefore also all possibilities of slabbers in these areas.

It is to notice that the element of contenance 1 can be realized with a normal fabric composed of natural fibres as cotton or similar materials or also , as tested , of a bed of fabric and a bed of TNT that are adequately innerconnected as known .

The weft of the fabric is thick enough to allow the free outcoming of gas and exactly of the remaining air , initially between the element of contenance 1 and the basin 2 and the outcoming of the gas of expansion that is produced during the insulation phase reducing all to a minimal transpiration of expanded resin, avoiding anyway the free passage of the same .

The restricted transpiration of the expanded resin allows the sticking and the subsequent fastening of the cover that forms the same element of contenance 1 to the surfaces of the relevant walls of external contenance of the same.

The use of normal fabric with thick weft and with threads of 0.2 : 0.5 mm ca. together with a light bed of TNT with an initial thickness of 1 mm has given very good results

Good or at least equivalent results have been obteined utilizing rather than natural fibres, artificial fibres like polyester fibres , polyamide and others.

The particular solution that is object of this discovery , that has been above described , avoids the principal drawback due to the presence of slabbers of expanded resin in the front margins of the cold - store of the refrigerator , this way it is possible to produce without discarding and obtaining other considerable advantages that are here below explaned .

The use of the cover that forms the same element of contenance 1 reduces the quantity of expanded material utilized for the insulation, permitting in this way a discreet economy ; besides with this solution it is possible to obtain also a notable reduction of labour and of the work time and subsequently a farther notable production economy .

It is clear that different variations can be applied to this solution without getting off the ambit above described and further on claimed with reference to the enclosed drawings and therefore from the object of protection of the present industrial privative .

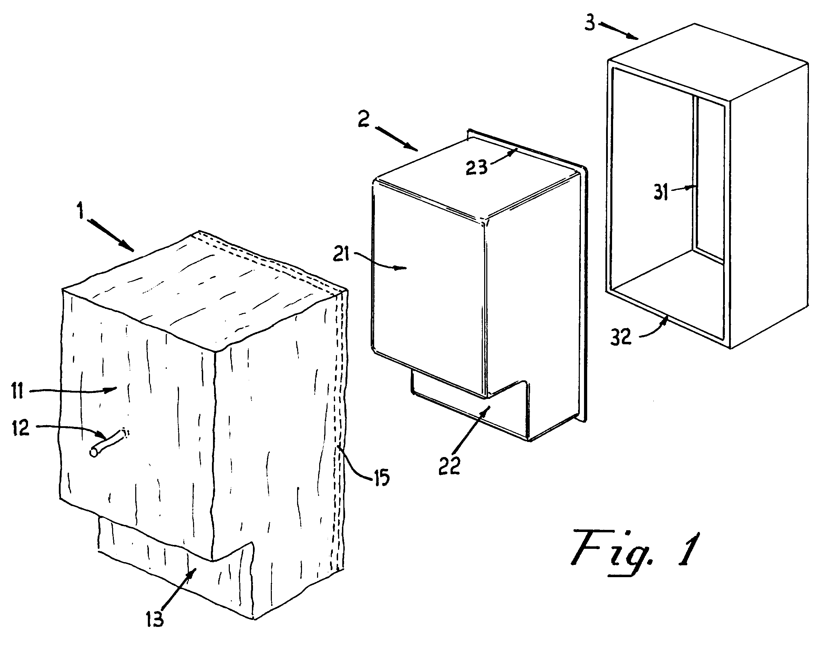

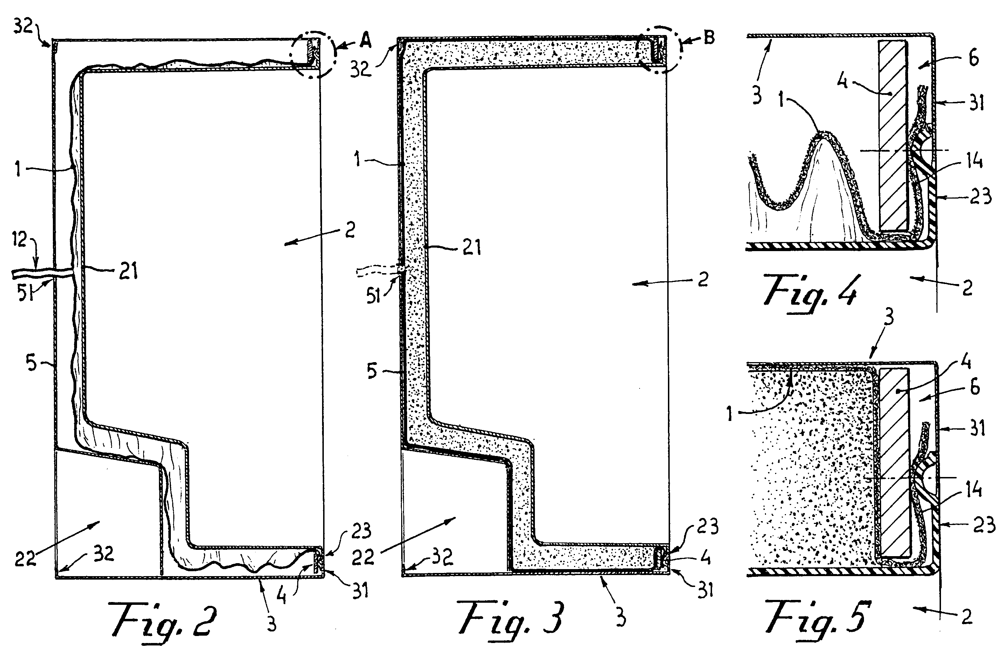

## Claims

1. Element of contenance of expanded materials utilized for the insulation of walls , especially of refrigerators, this element of contenance, is utilized essentially in the insulation of cold - stores walls especially for domestic type to avoid the presence of slabbers that normally appear in correspondence of the angles of the front perimetral margins of the same as consequence of the outcoming of expanded material utilized for the walls insulation from slabbers that normally are in those areas, this element of contenance 1 , consists of a cover made of an adequated fabric which is substantially conformed to the basin 2 of the same refrigerator to which is applied , presenting dimensions that with reference to those of the same basin 2 are adequately bigger , equal almoust to the insulation thickness , and exactly to the thickness of the interspace situated between the exterior surfaces of basin 2 and the inner surfaces of the walls of the perimetral cover 3 and of the conformed wall 5 that form the exterior complete cover in which the basin 2 is placed ; this element of contenance 1 is fixed with tract 14 of its perimetral margin to the relevant perimetral margin 23 that protrudes orthogonally to the exterior from the front margin of the basin 2 , in various ways and methods , all known and normally applied in the production of the cold - stores of refrigerators , in correspondence of the point of injection of the expanded material that normally is obtained by an hole 51 , realized on the conformed wall 5 , resulting in the back part of the external cover of the cold - store of the refrigerator , on the correspondent basic wall 11 of the same element of contenance 1 is obtained the tube 12 that gets into the same 1 and that gets throught this hole 51 resulting situated in the external side of this conformed wall 5 to allow the connection of the injection nozzle of the expanded material ; when the elemente of contenance 1 has been fixed to the basin 2 , and when the operation of assembling of the parts of the cold - store of the refrigerator is traditionally completed this all is placed into an adequated dispositive to delimit , during the phase of injection of the expanded material the thickness of the insulated walls ; the injection throught this tube 12 of the mixture formed with expanded resin and the relevant gas of expansion, causes a progressive filling up of the space resulting between the external surface of the walls of the basin 2 and the cover that forms the same element of contenance 1 that subsequently is pushed against the inner surfaces of the perimetral cover 3 , of the conformed wall 5 and of the listel 4 , that is fixed on the perimetral margin 23 of the basin 2 ; the fabric of this cover 1 permits only the passage of gas , avoiding the passage of the expanded resin and subsequently the outcoming of the same from every fissures of the cover that need to be insulated ; in this way all slabbers are excluded .

2. Element as by claiming 1 , characterized by the fact that this element of contenance 1 is realized with a fabric that presents threads made of natural fibre like cotton or similar and also of artificial fibre like polyester , polyammide or others and presenting a weft discreetly thick to allow the passage only of gas , permitting to the expanded resin that has been utilized for the insulation , to transpirate lightly from the cover that forms this element of contenance 1 in order to allow the sticking to the correspondent walls of contenance .

3. Element as by claiming 2, characterized by the fact that the fabric utilized to form this element of contenance 1 can be especially combined , with known methods and systems, to a bed of TNT composed by natural fibres and /or artificial , the thickness of this bed of TNT can change from 1 to 2 mm ca. .

4. Element as by previous claimings , characterized by the fact that by the inner surface of the perimetral margin of this element of contenance 1 is applied a beadhesive tape 15 to facilitate its initial application and fixing to the perimetral margin 23 of the basin 2 .

This all as substantially described and shown and for the specified aims .
